# EUROPÄISCHE PATENTSCHRIFT

(11) **EP 4 140 774 B1**
(45) Veröffentlichungstag und Bekanntmachung des Hinweises auf die Patenterteilung: **13.03.2024**
(21) Anmeldenummer: 22191633.1
(22) Anmeldetag: 23.08.2022
(51) Int. Cl.: B60C 11/01, B60C 11/12

(54) **FAHRZEUGREIFEN**
VEHICLE TYRE
BANDAGE PNEUMATIQUE POUR VÉHICULES

(30) Priorität: 30.08.2021 DE 102021209458
(43) Veröffentlichungstag der Anmeldung: 01.03.2023
(73) Patentinhaber: Continental Reifen Deutschland GmbH, 30175 Hannover (DE)
(72) Erfinder: Özüduru, Ahmet, 30165 Hannover (DE); Soyyuece, Atakan, 30165 Hannover (DE); Pagac, Lubomir, 30165 Hannover (DE); Jankowski, Morten, 30165 Hannover (DE)
(74) Vertreter: Continental Corporation

(56) Entgegenhaltungen:
- EP-A1- 3 572 242
- DE-T5-112016 003 402
- DE-T5-112017 002 199

## Beschreibung

Die Erfindung betrifft einen Fahrzeugluftreifen mit einem Laufstreifen und Seitenwänden, wobei der Laufstreifen zumindest eine schulterseitige Profilrippe mit einem innerhalb der Bodenaufstandsfläche befindlichen inneren Abschnitt und einem außerhalb der Bodenaufstandsfläche befindlichen Außenschulterabschnitt aufweist, wobei innerhalb der Profilrippe Einschnitte ausgebildet sind, welche sowohl im inneren Abschnitt als auch im Außenschulterabschnitt der schulterseitigen Profilrippe und im inneren Abschnitt in axialer Richtung oder zur axialer Richtung unter einem Winkel von bis zu 30° verlaufen.

Es ist bekannt und üblich, mittig zwischen Querrillen in schulterseitigen Profilrippen von Laufstreifen parallel oder im Wesentlichen parallel zu den Querrillen Einschnitte auszubilden, die in die Außenschulterabschnitte hinein verlaufen. Diese Einschnitte verlaufen entweder geradlinig, zickzack- oder wellenförmig. Ein Fahrzeugluftreifen der eingangs genannten Art mit derartigen, geradlinig verlaufenden Einschnitten in schulterseitigen Profilblöcken ist beispielsweise aus der DE 10 2017 203 225 A1 bekannt. Die in Außenschulterbereichen verlaufenden Einschnitte sollen auf nassen Fahrbahnen für eine Verbesserung der Wasserableitung über die schulterseitigen Profilrippen hinaus sorgen. Es hat sich nun herausgestellt, dass die bekannten Einschnitte bei Kurvenfahrt auf nassen Fahrbahnen eine Wasserableitung behindern anstatt zu verbessern.

Aus der DE 10 2018 220 707 A1 ist ein Fahrzeugluftreifen bekannt, welcher in den Außenschulterbereichen zwischen den Querrillen ausgebildete, in Draufsicht im Wesentlichen rechteckige und in Richtung Seitenwand auslaufende Vertiefungen aufweist, deren Tiefe in Richtung Seitenwand kontinuierlich abnimmt. Die diese Vertiefungen begrenzenden, quer zur Umfangsrichtung verlaufenden Seitenflanken weisen daher eine in Richtung zur Bodenaufstandsfläche des Reifens zunehmend größer werdende Breite auf. Beim Fahren auf weichem Untergrund, beispielsweise auf Schnee, Schneematsch, matschig erdigen oder unbefestigten Straßen kommt der Reifen beim Abrollen auch mit diesem Untergrundmaterial in Kontakt, sodass die Seitenflanken der Vertiefungen als Traktionsflächen wirken können und derart die Traktionseigenschaften des Reifens verbessern helfen.

Weitere gattungsbildende Fahrzeugluftreifen mit axialen Einschnitten, die sich in Profilrippen innerhalb der Bodenaufstandsfläche bis hin zum Außenschulterbereich des Reifens erstrecken, sind aus den Dokumenten EP 3 572 242 A1, DE 11 2016 003 402 T5 und DE 11 2017 002 199 T5 bekannt.

Der Erfindung liegt die Aufgabe zugrunde, bei einem Reifen der eingangs genannten Art auch auf nassen Fahrbahnen bei Kurvenfahrt eine gute Wasserableitung über die Außenschulterbereiche von Profilrippen sicherzustellen. Gelöst wird die gestellte Aufgabe erfindungsgemäß dadurch, dass im Außenschulterabschnitt eine in Umfangsrichtung umlaufende Reihe aus in Draufsicht dreieckigen, seichten, jeweils ein stumpfwinkeliges und zwei spitzwinkelige Ecken aufweisenden Vertiefungen ausgebildet ist, wobei das stumpfwinklige Eck der Vertiefungen in Richtung zum inneren Abschnitt der schulterseitigen Profilrippe weist und wobei am stumpfwinkeligen Eck der Vertiefungen einer der innerhalb der Profilrippe verlaufenden Einschnitte einmündet.

Die Vertiefungen, in welche die in die Außenschulterabschnitte hinein verlaufenden Einschnitte einmünden, sind somit dem Mündungsdelta von Flussmündungen nachempfunden. Die Vertiefungen sorgen daher für ein optimales Ein- und Ausströmen des aus dem Einschnitt kommenden Wassers beim Fahren auf nassen Fahrbahnen, vor allem auch bei Kurvenfahrt. Darüber hinaus wirken die Flanken, welche die Vertiefungen begrenzen, auf weichem Untergrund, wie beispielsweise Schnee oder Matsch und wenn der Reifen einsinkt, als Traktionsflächen.

Bei einer bevorzugten Ausführung weisen die Vertiefungen eine insbesondere konstante Tiefe von 0,50 mm bis 2,50 mm, insbesondere von 0,70 mm bis 1,50 mm, auf. Eine geringe Tiefe ist für die Wirkung der Vertiefungen zur Wasserableitung von aus den Einschnitten einströmendem Wasser besonders vorteilhaft. Darüber hinaus können die Vertiefungen auch eine Tiefe aufweisen, die Richtung Seitenwand geringer wird.

Für eine gute Ableitung von einströmendem Wasser ist es darüber hinaus besonders vorteilhaft, wenn die beiden spitzwinkeligen Ecken der Vertiefungen an der Außenfläche des Außenschulterabschnittes über eine Basiskante miteinander verbunden sind, welche sich insbesondere in Umfangsrichtung des Reifens erstreckt und von welchen eine vorzugsweise gerundet ausgeführte Basisflanke bis zum Boden der Vertiefungen verläuft.

Die Dimensionierung der Vertiefungen wird vorteilhafterweise an die jeweilige Reifendimension bzw. den jeweiligen Reifentyp angepasst. Die Basiskante, welche die beiden spitzwinkeligen Ecken der Vertiefungen miteinander verbindet, kann somit eine Länge von 5,00 mm bis 40,00 mm, insbesondere von 10,00 mm bis 20,00 mm, aufweisen.

Eine besonders effektive Wasserableitung wird ferner dadurch unterstützt, wenn die Vertiefungen an der Außenfläche des Außenschulterabschnittes von zwei die stumpfwinkeligen Ecken mit den spitzwinkeligen Ecken verbindenden Seitenkanten begrenzt sind, die am stumpfwinkeligen Eck miteinander einen Winkel von 110° bis 160° einschließen.

Ein verwirbelungsarmes Einfließen von Wasser aus den Einschnitten in die Vertiefungen wird weiters vorteilhafterweise dann unterstützt, wenn der am stumpfwinkeligen Eck der Vertiefungen einmündende Einschnitt mit einem Endabschnitt einmündet, dessen Tiefe der Tiefe der Vertiefungen am stumpfwinkeligen Eck entspricht.

Bei einer Ausgestaltung des Laufstreifens, bei welchem die schulterseitige Profilrippe mittels Querrillen in Profilblöcke gegliedert ist oder blockartig strukturiert ist, ist es von Vorteil, wenn die Querrillen, vorzugsweise analog und parallel zu den Einschnitten, sowohl im inneren Abschnitt als auch im Außenschulterabschnitt der schulterseitigen Profilrippe verlaufen, wobei jeweils einer der Einschnitte und jeweils eine der dreieckigen Vertiefungen mittig zwischen zwei in Umfangsrichtung benachbarten Querrillen ausgebildet ist.

Bei einer Ausführung mit Querrillen wird ein Ausströmen von in die Vertiefungen einströmendem Wasser dann unterstützt, wenn von den spitzwinkeligen Ecken der Vertiefungen ausgehend, insbesondere in Fortsetzung der Seitenkanten der Vertiefungen, Einschnitte jeweils bis zur benachbarten Querrille verlaufen.

Auch bei dieser Ausführung ist es bevorzugt, wenn die Einschnitte, die sich jeweils bis zur benachbarten Querrille erstrecken, zumindest an den spitzwinkeligen Ecken eine Tiefe aufweisen, die der Tiefe der Vertiefungen an den spitzwinkeligen Ecken entspricht.

Eine weitere Maßnahme sorgt dafür, dass auf nassen Fahrbahnen ein Wasserabfluss bis zur Seitenwand unterstützt wird. Diese Maßnahme sieht vor, dass von den in die Querrillen einmündenden Enden der von den Vertiefungen bis zu den Querrillen verlaufenden Einschnitte weitere Einschnitte unter einem Winkel von 50° bis 100° abzweigen, die bis zur Seitenwand verlaufen oder innerhalb des Außenschulterabschnittes enden oder ineinander münden oder über einen insbesondere parallel zur Basiskante der Vertiefungen verlaufenden Verbindungseinschnitt miteinander verbunden sind.

Bevorzugt weisen sämtliche erwähnte Einschnitte eine Breite von 0,40 mm bis 2,00 mm, vorzugsweise bis 1,00 mm auf. Sämtliche dieser Einschnitte können ferner die gleiche Breite aufweisen. Darüber hinaus können die Einschnitte zumindest abschnittsweise geradlinig, bogenförmig, zickzack- oder wellenförmig verlaufen.

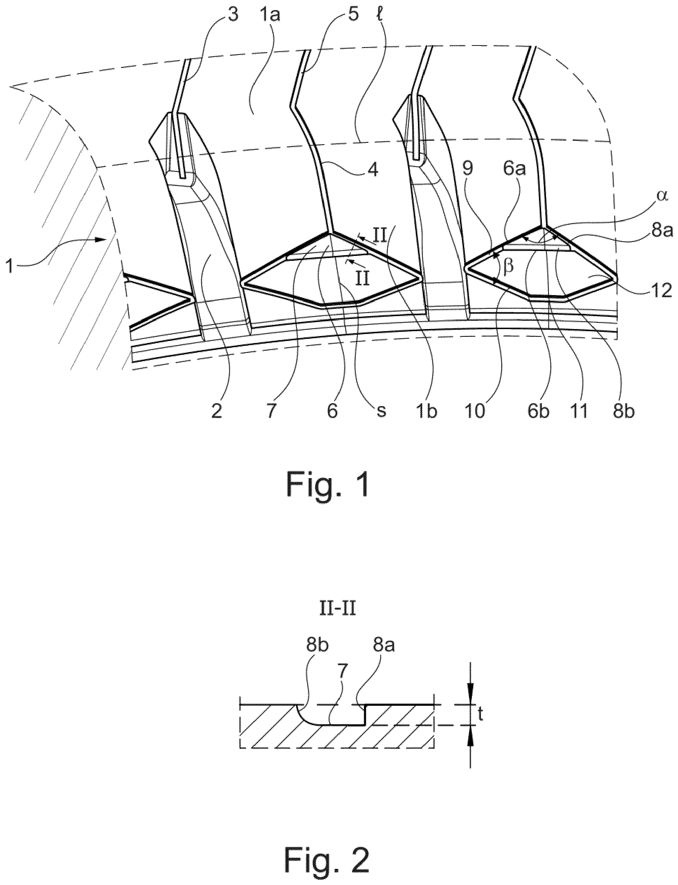

Weitere Merkmale, Vorteile und Einzelheiten der Erfindung werden nun anhand der Zeichnung, die schematisch ein Ausführungsbeispiel darstellt, näher beschrieben. Dabei zeigen Fig. 1 eine Schrägansicht eines Umfangsabschnittes einer schulterseitigen Profilrippe eines Laufstreifens eines Fahrzeugluftreifens und Fig. 2 einen vergrößerten Schnitt entlang der Linie II-II der Fig. 1.

Gemäß der Erfindung ausgeführte Fahrzeugluftreifen sind Reifen in Radialbauart beliebigen Typs, daher Reifen für LKW, PKW, ferner für Vans oder Light-Trucks.

In der Beschreibung und in den Patentansprüchen angegebene Dimensionen beziehen sich auf einen neuen Reifen. Dabei sind Dimensionsangaben für Rillen- oder Einschnitttiefen senkrecht zur Außenfläche und Dimensionsangaben für Rillen- oder Einschnittbreiten an der Außenfläche des Reifens zu ermitteln.

Die in Fig. 1 lediglich abschnittsweise gezeigte schulterseitige Profilrippe 1 ist von weiteren, nicht dargestellten Profilstrukturen, etwa einer Profilrippe, durch eine beispielsweise in Umfangsrichtung umlaufende Umfangsrille, die ebenfalls nicht gezeigt ist, getrennt. Entlang der zweiten, nicht gezeigten Laufstreifenschulter kann eine zur Profilrippe 1 analog ausgeführte Profilrippe verlaufen.

In Fig. 1 ist der seitliche Rand der Bodenaufstandsfläche des Laufstreifens durch eine gestrichelte Linie I gekennzeichnet. Die Bodenaufstandsfläche entspricht dem statisch ermittelten Footprint gemäß E.T.R.T.O.-Standard in der jeweils geltenden Fassung (Last bei 70 % der maximalen Tragfähigkeit bei einem Innendruck von 85 % der Tragfähigkeit). Die Profilrippe 1 weist daher einen innerhalb der Bodenaufstandsfläche befindlichen, in Umfangsrichtung umlaufenden Abschnitt 1a und einen außerhalb der Bodenaufstandsfläche befindlichen, in Umfangsrichtung umlaufenden und bei der nicht gezeigten Seitenwand endenden Außenschulterabschnitt 1b auf.

Wie Fig. 1 zeigt ist die schulterseitige Profilrippe 1 mit einer Vielzahl von in beiden Abschnitten 1a, 1b verlaufenden und ausgebildeten Querrillen 2 versehen, welche die Profilrippe 1 blockartig strukturieren. Beim gezeigten Ausführungsbeispiel verlaufen die Querrillen 2 im Wesentlichen parallel zueinander sowie in axialer Richtung bzw. unter einem spitzen Winkel von bis zu 30° zur axialen Richtung. Beim gezeigten Ausführungsbeispiel enden ferner die Querrillen 2 innerhalb des Abschnittes 1a und weisen an diesen Enden ihre größte Tiefe auf. Bei einer alternativen Ausführung verlaufen die Querrillen bis zur erwähnten Umfangsrille und münden in diese ein. Die Tiefe der Querrillen 2 nimmt ausgehend von ihren Enden im Abschnitt 1a bis zu ihren Enden im Außenschulterabschnitt 1b kontinuierlich ab, sodass die Querrillen 2 im Außenschulterabschnitt 1b, insbesondere beim Beginn der Seitenwand, auslaufen. Bei der in Fig. 1 gezeigten Ausführung gehen von den innerhalb des Abschnittes 1a befindlichen Enden der Querrillen 2 in Richtung zur nicht dargestellten Umfangsrille Einschnitte 3 aus, die im Wesentlichen parallel zueinander, geradlinig und unter einem stumpfen Winkel zu den Querrillen 2 verlaufen.

Mittig zwischen den Querrillen 3 verläuft jeweils ein weiterer Einschnitt 4, parallel bzw. weitgehend parallel zu den Querrillen 3 und sowohl innerhalb des Abschnittes 1a als innerhalb des Außenschulterabschnittes 1b der Profilrippe 1. Beim gezeigten Ausführungsbeispiel befindet sich das eine Ende jedes Einschnittes 4, in Umfangsrichtung betrachtet, auf gleicher Höhe mit den Enden der Querrillen 2 im Abschnitt 1a. Bei der gezeigten Ausführung schließen ferner an die Einschnitte 4 weitere Einschnitte 5 an, welche parallel zu den Einschnitten 4 verlaufen und entweder innerhalb der Profilrippe 1 enden oder bis zu der die Profilrippe 1 begrenzenden Umfangsrille reichen.

Im Außenschulterabschnitt 1b münden die Einschnitte 4 jeweils an dem einen Eck einer im Außenschulterabschnitt 1b ausgebildeten, in Draufsicht dreieckigen, insbesondere gleichseitig dreieckigen, Vertiefung 6 ein. Die Vertiefung 6 weist somit zwei gleich große oder weitgehend gleich große spitzwinkelige Ecken und ein stumpfwinkeliges Eck (Winkel α) auf, an welchem der Einschnitt 4 einmündet. Die Vertiefung 6 ist an der Außenfläche des Außenschulterabschnittes 1b von zwei Seitenkanten 6a und einer Basiskante 6b begrenzt, welche parallel zur Umfangsrichtung verläuft und eine Länge I von 5,00 mm bis 40,00 mm, insbesondere von 10,00 mm bis 20,00 mm, aufweist. Eine Senkrechte s auf die Basiskante 6b halbiert den stumpfen Winkel α, welcher 110° bis 160° beträgt. Die Vertiefung 6 weist einen Boden 7, von diesem zu den Seitenkanten 6a und senkrecht zur Außenfläche des Außenschulterabschnittes 1b verlaufende Seitenflanken 8a sowie eine vom Boden 7 gerundet zur Basiskante 6b verlaufende Basisflanke 8b (Fig. 2) auf. Der Boden 7 befindet sich einer insbesondere konstanten Tiefe t von 0,50 mm bis 2,50 mm, vorzugsweise von 0,70 mm bis 1,50 mm. Die Tiefe t entspricht somit der Tiefe der Vertiefung 6.

Der am stumpfwinkeligen Eck jeder Vertiefung 6 einmündende Einschnitt 4 weist an seinem im Abschnitt 1a befindlichen Ende seine größte Tiefe auf, die vorzugsweise 3,00 mm bis 5,00 mm beträgt. Die Tiefe des Einschnittes 4 nimmt vom im Abschnitt 1a befindlichen Ende des Einschnittes 4 ausgehend bis zum Einmündungsbereich am stumpfwinkeligen Eck der Vertiefung 6 sukzessive ab und entspricht bei der Einmündung in die Vertiefung 6 der Tiefe der Vertiefung 6 an dieser Stelle.

In Fortsetzung der beiden die Vertiefung 6 begrenzenden Seitenflanken 8a verlaufen äußere Einschnittwände von Einschnitten 9, die jeweils geradlinig bis zur benachbarten Querrille 2 verlaufen. Von den Einmündungsstellen der Einschnitte 9 in die Querrillen 2 zweigen unter einem Winkel β von 50° bis 100° weitere Einschnitte 10 ab, deren zweite Enden über einen parallel zur Basiskante der Vertiefung 6 verlaufenden Verbindungsabschnitt 11, welcher in Umfangsrichtung des Außenschulterabschnittes 1b verläuft, miteinander verbunden sind. Bei einer alternativen Ausführung münden die beiden im Wesentlichen gleich lang ausgeführten Einschnitte 10 ineinander. Die Einschnitte 9, 10 und 11 weisen eine insbesondere konstante Tiefe von 0,70 mm bis 1,50 mm auf und umlaufen ein Flächenelement 12 an der Außenfläche des Außenschulterabschnittes 1b. Sämtliche der erwähnten Einschnitte 3, 4, 5, 9, 10 und 11 weisen eine Breite von 0,40 mm bis 2,00 mm, vorzugsweise bis 1,00 mm auf, wobei die Breiten der Einschnitte 3, 4, 5, 9, 10 und 11 übereinstimmen können. Sämtliche Einschnitte 3, 4, 5, 9, 10 und 11 verlaufen ferner bevorzugt geradlinig, können aber auch insgesamt bogen-, zickzack- oder wellenförmig verlaufen.

Bei einer nichtdargestellten Variante weist die schulterseitige Profilrippe keine oder keine im Außenschulterabschnitt verlaufende Querrillen auf.

### Bezugszeichenliste

- 1: Profilrippe
- 1a: innerer Abschnitt
- 1b: Außenschulterabschnitt
- 2: Querrille
- 3, 4, 5: Einschnitt
- 6: Vertiefung
- 6a: Seitenkante
- 6b: Basiskante
- 7: Boden der Vertiefung
- 8a: Seitenflanke
- 8b: Basisflanke
- 9, 10, 11: Einschnitt
- 12: Flächenelement
- s: Linie
- α, β: Winkel
- l: Linie
- t: Tiefe

## Patentansprüche

1. Fahrzeugluftreifen mit einem Laufstreifen und Seitenwänden, wobei der Laufstreifen zumindest eine schulterseitige Profilrippe (1) mit einem innerhalb der Bodenaufstandsfläche befindlichen inneren Abschnitt (1a) und einem außerhalb der Bodenaufstandsfläche befindlichen Außenschulterabschnitt (1b) aufweist, wobei innerhalb der Profilrippe (1) Einschnitte (4) ausgebildet sind, welche sowohl im inneren Abschnitt (1a) als auch im Außenschulterabschnitt (1) der schulterseitigen Profilrippe (1) und im inneren Abschnitt (1a) in axialer Richtung oder zur axialer Richtung unter einem Winkel von bis zu 30° verlaufen,
**dadurch gekenzeichnet,**
dass im Außenschulterabschnitt (1b) eine in Umfangsrichtung umlaufende Reihe aus in Draufsicht dreieckigen, seichten, jeweils ein stumpfwinkeliges und zwei spitzwinkelige Ecken aufweisenden Vertiefungen (6) ausgebildet ist, wobei das stumpfwinklige Eck der Vertiefungen (6) in Richtung zum inneren Abschnitt (1a) der schulterseitigen Profilrippe (1) weist und wobei am stumpfwinkeligen Eck der Vertiefungen (6) einer der innerhalb der Profilrippe (1) verlaufenden Einschnitte (4) einmündet.

2. Fahrzeugluftreifen nach Anspruch 1, **dadurch gekennzeichnet, dass** die Vertiefungen (6) eine insbesondere konstante Tiefe (t) von 0,50 mm bis 2,50 mm, insbesondere 0,70 mm bis 1,50 mm, aufweisen.

3. Fahrzeugluftreifen nach Anspruch 1 oder 2, **dadurch gekennzeichnet, dass** die beiden spitzwinkeligen Ecken der Vertiefungen (6) an der Außenfläche des Außenschulterabschnittes (2b) über eine Basiskante (8b) miteinander verbunden sind, welche sich insbesondere in Umfangsrichtung des Reifens erstreckt und von welcher eine vorzugsweise gerundet ausgeführte Basisflanke (6b) bis zum Boden (7) der Vertiefungen (6) verläuft.

4. Fahrzeugluftreifen nach Anspruch 3, **dadurch gekennzeichnet, dass** die Basiskante (8b), welche die beiden spitzwinkeligen Ecken der Vertiefungen (6) miteinander verbindet, eine Länge (I) von 5,00 mm bis 40,00 mm, insbesondere von 10,00 mm bis 20,00 mm, aufweist.

5. Fahrzeugluftreifen nach einem der Ansprüche 1 bis 4, **dadurch gekennzeichnet, dass** der am stumpfwinkeligen Eck der Vertiefungen (6) einmündende Einschnitt (4) mit einem Endabschnitt einmündet, dessen Tiefe der Tiefe der Vertiefungen (6) am stumpfwinkeligen Eck entspricht.

6. Fahrzeugluftreifen nach einem der Ansprüche 1 bis 5, **dadurch gekennzeichnet, dass** die Vertiefungen (6) an der Außenfläche des Außenschulterabschnittes (1b) von zwei das stumpfwinklige Eck mit den spitzwinkeligen Ecken verbindenden Seitenkanten (6a) begrenzt sind, die am stumpfwinkeligen Eck miteinander einen Winkel (α) von 110° bis 160° einschließen.

7. Fahrzeugluftreifen nach einem der Ansprüche 1 bis 6, bei welchem die schulterseitige Profilrippe (1) mittels Querrillen (2) in Profilblöcke gegliedert ist oder blockartig strukturiert ist, **dadurch gekennzeichnet, dass** die Querrillen (2), vorzugsweise analog und parallel zu den Einschnitten (4), sowohl im inneren Abschnitt (1a) als auch im Außenschulterabschnitt (1b) der schulterseitigen Profilrippe (1) verlaufen, und wobei jeweils einer der Einschnitte (4) und jeweils eine der dreieckigen Vertiefungen (6) mittig zwischen zwei in Umfangsrichtung benachbarten Querrillen (2) verläuft bzw. ausgebildet ist.

8. Fahrzeugluftreifen nach einem der Ansprüche 1 bis 7, **dadurch gekennzeichnet, dass** von den spitzwinkeligen Ecken der Vertiefungen (6) ausgehend, insbesondere in Fortsetzung der Seitenkanten (6a) der Vertiefungen (6), Einschnitte (9) jeweils bis zur benachbarten Querrille (2) verlaufen.

9. Fahrzeugluftreifen nach Anspruch 8, **dadurch gekennzeichnet, dass** die Einschnitte (9), die sich jeweils bis zur benachbarten Querrille (2) erstrecken, an den spitzwinkeligen Ecken eine Tiefe aufweisen, die der Tiefe der Vertiefungen (6) an den spitzwinkeligen Ecken entspricht.

10. Fahrzeugluftreifen nach einem der Ansprüche 1 bis 9, **dadurch gekennzeichnet, dass** von den in die Querrillen (2) einmündenden Enden der von den Vertiefungen (6) bis zu den Querrillen (2) verlaufenden Einschnitte (9) weitere Einschnitte (10) unter einem Winkel (β) von 50° bis 100° abzweigen, die bis zur Seitenwand verlaufen oder innerhalb des Außenschulterabschnittes (1b) enden oder ineinander münden oder über einen insbesondere parallel zur Basiskante (6b) der Vertiefungen (6) verlaufenden Verbindungseinschnitt (11) miteinander verbunden sind.

11. Fahrzeugluftreifen nach einem der Ansprüche 1 bis 10, **dadurch gekennzeichnet, dass** sämtliche erwähnte Einschnitte (3, 4, 5, 9, 10 und 11) eine Breite von 0,40 mm bis 2,00 mm, vorzugsweise bis 1,00 mm aufweisen.

## Claims

1. Pneumatic vehicle tyre with a tread and sidewalls, wherein the tread has at least one shoulder-side profile rib (1) with an inner portion (1a) which is situated within the ground contact patch, and with an outer shoulder portion (1b) which is situated outside the ground contact patch, wherein formed within the profile rib (1) are sipes (4) which, in the inner portion (1a) as well as in the outer shoulder portion (1) of the shoulder-side profile rib (1) and in the inner portion (1a), run in the axial direction or at an angle of up to 30° with respect to the axial direction,
**characterized in that**
formed in the outer shoulder portion (1b) is a circumferentially encircling row of shallow depressions (6) which, when viewed from above, are triangular and have in each case one obtuse-angled corner and two acute-angled corners, wherein the obtuse-angled corner of the depressions (6) points in the direction of the inner portion (1a) of the shoulder-side profile rib (1), and wherein one of the sipes (4) running within the profile rib (1) opens out at the obtuse-angled corner of the depressions (6).

2. Pneumatic vehicle tyre according to Claim 1, **characterized in that** the depressions (6) have an in particular constant depth (t) of 0.50 mm to 2.50 mm, in particular 0.70 mm to 1.50 mm.

3. Pneumatic vehicle tyre according to Claim 1 or 2, **characterized in that** the two acute-angled corners of the depressions (6) are connected to one another on the outer face of the outer shoulder portion (2b) by way of a base edge (8b) which extends in particular in the circumferential direction of the tyre and from which a base flank (6b), preferably embodied so as to be radiussed, runs to the bottom (7) of the depressions (6).

4. Pneumatic vehicle tyre according to Claim 3, **characterized in that** the base edge (8b) that connects the two acute-angled corners of the depressions (6) to one another has a length (I) of 5.00 mm to 40.00 mm, in particular of 10.00 mm to 20.00 mm.

5. Pneumatic vehicle tyre according to one of Claims 1 to 4, **characterized in that** the sipe (4) that opens out at the obtuse-angled corner of the depressions (6) opens out by way of an end portion, the depth of the latter corresponding to the depth of the depressions (6) at the obtuse-angled corner.

6. Pneumatic vehicle tyre according to one of Claims 1 to 5, **characterized in that** the depressions (6) on the outer face of the outer shoulder portion (1b) are delimited by two lateral edges (6a) which connect the obtuse-angled corner and the acute-angled corners to one another and at the obtuse-angled corner conjointly enclose an angle (α) of 110° to 160°.

7. Pneumatic vehicle tyre according to one of Claims 1 to 6, wherein the shoulder-side profile rib (1) by means of transverse grooves (2) is divided into profile blocks or structured in the manner of blocks, **characterized in that** the transverse grooves (2), preferably in a manner analogous to the sipes (4) and parallel to the latter, run in the inner portion (1a) as well as in the outer shoulder portion (1b) of the shoulder-side profile rib (1), and wherein in each case one of the sipes (4) and in each case one of the triangular depressions (6) runs, or is configured, so as to be centric between two transverse grooves (2) that are mutually adjacent in the circumferential direction.

8. Pneumatic vehicle tyre according to one of Claims 1 to 7, **characterized in that**, proceeding from the acute-angled corners of the depressions (6), in particular in the continuation of the lateral edges (6a) of the depressions (6), sipes (9) run in each case to the adjacent transverse groove (2).

9. Pneumatic vehicle tyre according to Claim 8, **characterized in that** the sipes (9), which extend in each case to the adjacent transverse groove (2), at the acute-angled corners have a depth which corresponds to the depth of the depressions (6) at the acute-angled corners.

10. Pneumatic vehicle tyre according to one of Claims 1 to 9, **characterized in that** further sipes (10) branch off at an angle (β) of 50° to 100° from ends, opening out into the transverse grooves (2), of the sipes (9) that run from the depressions (6) to the transverse grooves (2), said further sipes (10) running to the sidewall or ending or opening into one another within the outer shoulder portion (1b) or being connected to one another by way of a connecting sipe (11) which runs in particular so as to be parallel to the base edge (6b) of the depressions (6).

11. Pneumatic vehicle tyre according to one of Claims 1 to 10, **characterized in that** all of the sipes (3, 4, 5, 9, 10 and 11) mentioned have a width of 0.40 mm to 2.00 mm, preferably to 1.00 mm.

## Revendications

1. Pneumatique pour véhicule comprenant une bande de roulement et des flancs, la bande de roulement présentant au moins une nervure profilée (1) côté épaulement avec une section intérieure (1a) située à l'intérieur de la surface de contact avec le sol et une section d'épaulement extérieure (1b) située à l'extérieur de la surface de contact avec le sol, des entailles (4) étant formées à l'intérieur de la nervure profilée (1), lesquelles s'étendent à la fois dans la section intérieure (1a) et dans la section d'épaulement extérieure (1) de la nervure profilée (1) côté épaulement, et dans la section intérieure (1a) dans la direction axiale ou selon un angle allant jusqu'à 30° par rapport à la direction axiale, **caractérisé en ce que**, dans la section d'épaulement extérieure (1b) est formée une rangée circonférentielle d'évidements (6) peu profonds, triangulaires en vue de dessus, présentant chacun coin à angle obtus et deux coins à angle aigu, le coin à angle obtus des évidements (6) étant orienté en direction de la section intérieure (1a) de la nervure profilée (1) côté épaulement et l'une des entailles (4) qui s'étend à l'intérieur de la nervure profilée (1) débouchant sur le coin à angle obtus des évidements (6).

2. Pneumatique pour véhicule selon la revendication 1, **caractérisé en ce que** les évidements (6) présentent une profondeur (t) notamment constante, allant de 0,50 mm à 2,50 mm, en particulier de 0,70 mm à 1,50 mm.

3. Pneumatique pour véhicule selon la revendication 1 ou la revendication 2, **caractérisé en ce que** les deux coins à angle aigu des évidements (6) sont reliés l'un à l'autre sur la surface extérieure de la section d'épaulement extérieure (2b) par un bord de base (8b) qui s'étend en particulier dans la direction circonférentielle du pneumatique et à partir duquel s'étend un flanc de base (6b), de préférence arrondi, jusqu'au fond (7) des évidements (6).

4. Pneumatique pour véhicule selon la revendication 3, **caractérisé en ce que** le bord de base (8b), qui relie entre eux les deux coins à angle aigu des évidements (6), présente une longueur (I) allant de 5,00 mm à 40,00 mm, en particulier de 10,00 mm à 20,00 mm.

5. Pneumatique pour véhicule selon l'une des revendications 1 à 4, **caractérisé en ce que** l'entaille (4) débouchant au niveau du coin à angle obtus des évidements (6) débouche par une portion d'extrémité dont la profondeur correspond à la profondeur des évidements (6) au niveau du coin à angle obtus.

6. Pneumatique pour véhicule selon l'une des revendications 1 à 5, **caractérisé en ce que** les évidements (6) sont délimités sur la surface extérieure de la section d'épaulement extérieure (1b) par deux arêtes latérales (6a) reliant le coin à angle obtus aux coins à angle aigu, qui forment entre elles, au niveau du coin à angle obtus, un angle (α) allant de 110° à 160°.

7. Pneumatique pour véhicule selon l'une des revendications 1 à 6, dans lequel la nervure profilée (1) côté épaulement est divisée en blocs profilés au moyen de rainures transversales (2) ou est structurée à la manière de blocs, **caractérisé en ce que** les rainures transversales (2), de préférence analogues et parallèles aux entailles (4), s'étendent aussi bien dans la section intérieure (1a) que dans la section d'épaulement extérieure (1b) de la nervure profilée (1) côté épaulement, et dans lequel l'une des entailles (4) respectives et l'un des évidements triangulaires (6) respectif s'étendent ou sont formés au centre entre deux rainures transversales (2) adjacentes dans la direction circonférentielle.

8. Pneumatique pour véhicule selon l'une des revendications 1 à 7, **caractérisé en ce que** des entailles (9) s'étendent chacune à partir des coins à angle aigu des évidements (6), en particulier dans le prolongement des arêtes latérales (6a) des évidements (6), jusqu'à la rainure transversale (2) adjacente.

9. Pneumatique pour véhicule selon la revendication 8, **caractérisé en ce que** les entailles (9), qui s'étendent chacune jusqu'à la rainure transversale (2) adjacente, présentent au niveau des coins à angle aigu une profondeur qui correspond à la profondeur des évidements (6) au niveau des coins à angle aigu.

10. Pneumatique pour véhicule selon l'une des revendications 1 à 9, **caractérisé en ce que**, depuis les extrémités des entailles (9) partant des évidements (6) jusqu'aux rainures transversales (2) débouchant dans les rainures transversales (2), partent d'autres entailles (10) selon un angle (β) allant de 50° à 100°, qui s'étendent jusqu'à la paroi latérale ou se terminent à l'intérieur de la section d'épaulement extérieure (1b) ou se rejoignent ou sont reliées entre elles par une entaille de liaison (11) s'étendant en particulier parallèlement au bord de base (6b) des évidements (6).

11. Pneumatique pour véhicule selon l'une des revendications 1 à 10, **caractérisé en ce que** toutes les entailles mentionnées (3, 4, 5, 9, 10 et 11) ont une largeur allant de 0,40 mm à 2,00 mm, de préférence allant jusqu'à 1,00 mm.
